Europäisches Patentamt

European Patent Office

Office européen des brevets

(19)

(11) Numéro de publication : **0 079 266**
**B1**

(12) # FASCICULE DE BREVET EUROPÉEN

(45) Date de publication du fascicule du brevet :
30.01.85

(51) Int. Cl.⁴ : **C 03 B   5/02, H 05 B   6/22**

(21) Numéro de dépôt : **82401980.6**

(22) Date de dépôt : **26.10.82**

(54) **Dispositif de fusion par induction directe de substances diélectriques du genre verres ou émaux.**

(30) Priorité : **06.11.81 FR 8120860**
**30.07.82 FR 8213353**

(43) Date de publication de la demande :
**18.05.83 Bulletin 83/20**

(45) Mention de la délivrance du brevet :
**30.01.85 Bulletin 85/05**

(84) Etats contractants désignés :
**BE CH DE GB IT LI NL SE**

(56) Documents cités :
**DE-C-   886 353**
**FR-A- 1 186 996**
**FR-A- 1 358 438**
**FR-A- 1 492 063**
**FR-A- 1 509 985**
**US-A- 3 636 293**

(73) Titulaire : **SOCIETE D'APPLICATIONS DE LA PHYSI-**
**QUE MODERNE ET DE L'ELECTRONIQUE**
**SAPHYMO-STEL**
**29, avenue Carnot**
**F-91301 Massy (FR)**

(72) Inventeur : **Reboux, Jean**
**THOMSON-CSF SCPI 173, bld Haussmann**
**F-75379 Paris Cedex 08 (FR)**

(74) Mandataire : **Schmolka, Robert et al**
**THOMSON-CSF SCPI 173, Bld Haussmann**
**F-75379 Paris Cedex 08 (FR)**

Jouve, 18, rue St-Denis, 75001 Paris, France

## Description

L'invention concerne un dispositif (ou four électrique) de fusion par induction directe de substances diélectriques qui sont isolantes à froid, mais qui deviennent conductrices à partir d'une température propre à chaque substance, qui sera appelée température d'inductibilité ou d'amorçage dans ce qui suit. Plus précisément, de telles substances sont parfaitement isolantes à froid, mais leur résistivité décroît brusquement et devient, par exemple, inférieure à $10^{-2}$ ohm/m²/m, avec l'augmentation de la température, au-delà d'une valeur de seuil appelée température d'amorçage, comprise par exemple entre 600 et 1 000 °C, de telle sorte qu'elles deviennent susceptibles de conduire des courants induits dans la masse par un champ magnétique alternatif (de moyenne ou de haute fréquence) engendré à l'aide d'un inducteur entourant une charge d'une telle substance.

Par « induction directe » on comprendra donc dans ce qui suit que le siège des courants induits est constituée par la charge elle-même qui doit être chauffée jusqu'à la fusion. Pour une charge comprenant uniquement des substances isolantes à froid du type susmentionné, une partie de celle-ci doit être préchauffée pour atteindre cette température d'amorçage à l'aide de moyens classiques, tels qu'un « suscepteur » amovible en un matériau réfractaire, conducteur à froid, en métal (tungstène, molybdène, par exemple) ou en graphite, plongé temporairement dans la charge divisée (voir, par exemple, la publication FR-A-1 509 985, à la page 2, colonne de gauche, lignes 6 à 16), ou, lorsqu'il s'agit de faire fondre des oxydes métalliques dont l'un des composants métalliques réagit avec l'oxygène de manière fortement exothermique, c'est-à-dire en dégageant une forte chaleur, on peut déposer sur ou dans la charge, une faible quantité de grenailles ou copeaux de ce métal, qui fondus par induction s'oxydent et permettent de rendre localement conductrice les parties avoisinantes de la charge, afin qu'elles deviennent le siège de courants induits (voir, par exemple, la publication FR-A-1 427 905, à la page 2, colonne de droite, lignes 6 à 17). Par exemple, lorsqu'il s'agit de faire fondre du verre contenant de la silice ($SiO_2$), il est possible d'utiliser de la poudre ou de la grenaille de silicium métallique qui en s'oxydant s'ajoute à la silice de la charge sans la contaminer.

Dans un four électrique à induction directe, on n'utilise aucun moyen de chauffage intermédiaire, tel qu'un creuset en métal réfractaire ou graphite, entre l'inducteur et la charge. Ceci signifie que l'on peut utiliser soit un creuset en matériau réfractaire isolant à température d'amorçage supérieure à la température de fusion de la charge (voir FR-A-2 054 464), soit une cage ou un creuset refroidis à une température notablement inférieure à la température d'amorçage de la charge qui peut être en matériau diélectrique (quartz ou silice, cf. FR-A-1 509 985) ou en matériau conducteur divisé, réalisé au moyen d'éléments tubulaires juxtaposés et isolés l'un de l'autre (voir par exemple FR-A-1 492 063 ou GB-A-1 221 909), où les parois internes refroidies de la cage (ou du creuset) se recouvrent d'elles-mêmes d'une couche formée par la substance constituant la charge, sous une forme pulvérulente, granuleuse ou frittée, ou encore agglomérée par la chaleur ou une transition quasi continue entre ces formes. Cette couche périphérique qui est électriquement et thermiquement isolante, remplace le creuset réfractaire préfabriqué (d'où l'appelation « auto-creuset » ou de formation de creuset « in situ »).

Dans la publication FR-A-1 186 996 (voir préambule de la revendication 1) on a décrit et dans la publication FR-A-1 492 063 précitée (cf. page 1, colonne de gauche, lignes 17 à 24 et 30 à 38), on a mentionné un dispositif de fusion par induction directe dans lequel un inducteur constitué par une paroi métallique double, refroidie par une circulation interne de fluide, sert à la fois d'inducteur monospire, de creuset de fusion et d'organe de mise en forme d'une barre ou d'un lingot de matériau électrofondu. Plus précisément, l'inducteur monospire y comprend deux parois cylindriques coaxiales (de diamètres différents), métalliques, respectivement obturées à leurs extrémités par des parois annulaires, ainsi que par deux parois longitudinales parallèles et adjacentes qui forment entre elles une fente longitudinale étroite, de façon à former un corps conducteur creux et étanche qui est capable d'être refroidi par une circulation interne de fluide (eau). Les deux extrémités de la spire unique ouverte, situées de part et d'autre de la fente, sont respectivement électriquement couplées, au moyen d'un transformateur adaptateur d'impédance, aux bornes d'un générateur de courant alternatif de puissance convenable.

Comme dans le cas de la cage froide susmentionnée, la partie périphérique de la charge d'une substance qui est diélectrique à froid, qui recouvre la paroi intérieure refroidie de l'inducteur monospire, forme une enveloppe cylindrique qui isole cette paroi électriquement et thermiquement du restant de la charge fondue ou amorcée (ayant atteint la température d'inductibilité).

Au voisinage de la fente d'ouverture de l'inducteur monospire se produit un champ électrique circonférentiel d'intensité élevée, qui ne présente pratiquement aucun effet néfaste, si les matériaux constituant la charge présentent des températures d'amorçage peu différentes de leurs points fusion (ceci est le cas de la silice, de la magnésie et de l'alumine, par exemple). D'autres matériaux réfractaires, tels que des oxydes métalliques comme la zircone, l'oxyde de titane ou la thorine, ou des mélanges contenant l'un de ceux-ci, présentent des températures d'amorçage nettement inférieures (1 000 à 1 500 °C) à leur point de fusion (2 000 à 3 000 °C), ils peuvent donc devenir conducteurs à l'état solide et contribuer à la formation d'arcs électriques entre les bords de la fente qui, en réchauffant les parties avoisinantes, produiraient des court-circuits pouvant arrêter la fusion et/ou endommager l'inducteur et le générateur.

La valeur de l'inductivité (self) d'un inducteur monospire cylindrique réalisé à l'aide d'une bande plate est une fonction croissante du rayon de la spire et décroissante de la largeur de la bande, ce qui limite notablement la hauteur du volume de la charge. Cette inductance étant relativement faible, il est nécessaire d'utiliser des hautes ou très hautes fréquences (comprises entre quelques centaines de kilohertz et quelques mégahertz), pour lesquels des oscillateurs à tube s'imposent, car les onduleurs à thyristors dont les rendements sont plus élevés, ne dépassent généralement pas les 50 kHz. Les triodes et les tétrodes de puissance, utilisables dans de tels oscillateurs, ont des résistances anodiques ou internes relativement élevées par rapport à l'impédance en charge du circuit résonnant parallèle comprenant l'inducteur monospire, ce qui implique l'utilisation d'un transformateur adaptateur d'impédance dont l'enroulement primaire dans le circuit anodique comporte un nombre de spires élevé par rapport à ceux du secondaire, ainsi qu'une inductance de fuite qui peut absorber une grande partie de la puissance réactive développée. La profondeur de pénétration des courants dans la charge ainsi que le brassage du bain sont également plus faibles à des fréquences élevées.

La présente invention permet de remédier à la plupart des inconvénients de l'état de la technique connu jusqu'ici, inconvénients qui résultent soit de l'utilisation du creuset-inducteur monospire associée à l'emploi d'une fréquence élevée ou de l'utilisation d'une cage froide multisegmentée dont la présence dans le champ de l'inducteur occasionne à la fois des pertes supplémentaires par effet de Joule dans la cage et une perte de couplage entre l'inducteur et la charge. Cette perte de couplage diminue d'une part l'efficacité électrique de l'inducteur sur le plan de l'apport thermique à la charge et d'autre part elle atténue l'effet des forces électromagnétiques de confinement et de brassage du bain, bénéfique dans le cas présent. L'épaisseur de la pellicule solide qui se forme, au voisinage de la paroi froide se trouve ainsi réduite et par là même l'isolement thermique qu'elle apporte vis-à-vis de la charge à son contact.

L'invention a en effet pour objet un four électrique pour induction directe permettant de traiter (fondre) des charges allant de cinquante à plusieurs centaines de kilogrammes de verres ou d'émaux vitreux (inorganiques), dans un récipient-inducteur dont le diamètre intérieur peut, par conséquent, être généralement supérieur à 0,5 mètres et qui, du fait qu'il comprend plusieurs spires, peut être alimenté par un courant alternatif de moyenne fréquence (inférieure à 50 kHz) ayant une profondeur de pénétration très supérieure à celle de la haute ou très haute fréquence (dans l'intervalle de cent kilohertz à quelques mégahertz) qu'il faut utiliser avec l'inducteur monospire. Des inducteurs multispires de forme cylindrique ou tronconique sont connus en soi et décrits, par exemple, dans la publication DE-C-886 353.

Plus précisément, la présente invention a pour objet un dispositif de fusion par induction directe de substances diélectriques dont les températures d'inductibilité et de fusion sont voisines, qui comprend un récipient dont la paroi latérale refroidie est constituée par l'inducteur de chauffage, lui-même.

Suivant l'invention, ce récipient-inducteur est composé d'une pluralité de spires en métal conducteur tubulaire, électriquement et hydrauliquement reliées en série, assemblées par superposition de telle sorte que le centre de chaque spire coïncide avec l'axe de symétrie vertical de l'inducteur et parcourues par un fluide de refroidissement, de manière à former un corps creux s'étendant sensiblement sur la quasi-totalité de la hauteur de la paroi latérale du récipient.

L'invention sera mieux comprise et d'autres de ses objets, caractéristiques et avantages ressortiront de la description qui suit et des dessins annexés s'y rapportant, donnés à titre d'exemple non limitatif, sur lesquels :

la figure 1 montre une coupe axiale en élévation d'un premier mode de réalisation du dispositif de l'invention ;

la figure 2 montre une coupe axiale partielle en élévation du mode de réalisation préféré de la paroi latérale multispire du dispositif de la figure 1 ;

la figure 3 montre schématiquement une coupe axiale en élévation d'un mode de réalisation avantageux d'un inducteur à plusieurs enroulements coaxiaux ;

la figure 4 montre schématiquement une coupe axiale en élévation d'un mode de réalisation avantageux d'un inducteur destiné à un four à haut rendement ; et

la figure 5 montre un diagramme illustrant la puissance induite en fonction de la hauteur du bain dans un four à inducteur-récipient à paroi latérale cylindrique (A) et à paroi latérale tronconique (B).

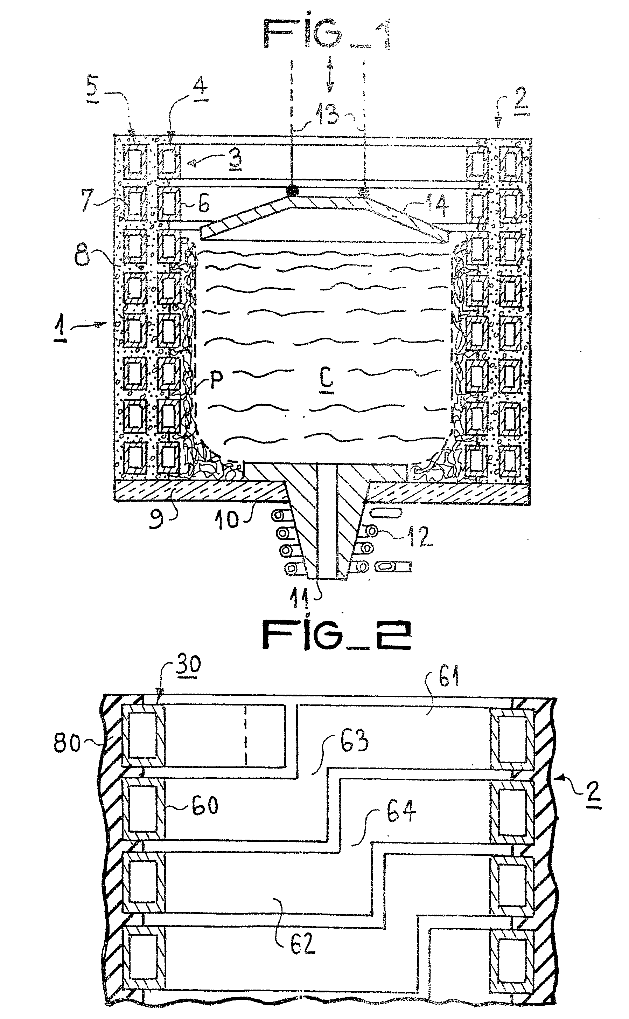

Sur la figure 1, on a illustré en coupe axiale un four vertical par induction directe dans un récipient 1 dont la paroi latérale 2 refroidie comporte un inducteur multispire 3 composé de deux enroulements ou couches 4, 5 en forme de solénoïde, coaxiaux.

Chacun de ces enroulements 4, 5 comporte ici plusieurs spires (huit sur la figure) en un conducteur tubulaire de section rectangulaire, superposées et régulièrement espacées, qui sont en outre électriquement et hydrauliquement reliées en série. Les enroulements 4 et 5 sont respectivement composés de spires 6 et 7 ayant des diamètres différents de sorte que l'un 5 entoure l'autre 4 et qui s'étendent sur la quasi-totalité de la hauteur du récipient 1.

L'inducteur 3 est ainsi composé de deux enroulements solénoïdaux 4 et 5 coaxiaux, qui sont électriquement reliées en série de telle sorte que les champs magnétiques qu'ils engendrent lorsqu'ils sont parcourus par un même courant alternatif, s'additionnent à l'intérieur de l'espace délimité par l'enroulement intérieur 4. La connexion des deux enroulements 4, 5 en série permet d'augmenter d'environ quatre fois l'inductance de l'inducteur 3 (grâce à l'inductance mutuelle M) par rapport à celle d'un inducteur multispire à enroulement unique, ce qui entraîne une réduction notable de l'intensité du champ électrique entre deux spires 6 adjacentes de l'enroulement intérieur 4 dont les faces intérieures (celles en regard de l'axe de symétrie verticale) sont exposées de façon à entrer en contact avec la charge C dont elles doivent refroidir le pourtour P.

La réduction de l'intensité du champ électrique grâce à la présence de l'enroulement extérieur 5, permet de réduire l'espacement nécessaire entre les spires adjacentes.

Si, pour une raison quelconque, on désire diminuer la réactance inductive de l'inducteur 3, il est également possible de connecter les deux enroulements 4 et 5 en parallèle.

Lorsque les enroulements 4 et 5 sont reliés en série, il est possible d'insérer l'enroulement intérieur 4 entre deux moitiés de l'enroulement extérieur 5 ou de relier l'une des bornes de l'enroulement intérieur 4 à la masse (terre) à l'endroit de interconnexion, soit avec l'enroulement extérieur 5, soit avec le secondaire du transformateur, adaptateur d'impédance (non représenté), qui assure le couplage de l'inducteur 3 au générateur de puissance (non représenté).

L'espacement (de quelques millimètres, par exemple) entre les spires 6 adjacentes de l'enroulement intérieur 4 ou d'un inducteur multispire à enroulement unique (que cet enroulement 4 peut symboliser) est choisi aussi faible que possible afin que l'effet de refroidissement qu'elles exercent à cet endroit (au niveau de la fente entre spires voisines) soit suffisant pour empêcher les particules de la charge qui se trouvent à proximité d'atteindre une température telle qu'elles cessent d'être diélectriques (isolantes).

Les enroulements 4 et 5 ou l'inducteur à enroulement unique est muni d'un enrobage 8 en un matériau isolant, tel qu'un ciment réfractaire ou une résine à base de silicones (tel que celui commercialisé en France sous la dénomination « SILASTENE », marque déposée), afin d'en assurer la solidité mécanique, d'une part, et l'étanchéité aux particules de la charge C d'autre part. Cet enrobage 8 est réalisé de telle sorte qu'au moins la face intérieure métallique des spires 6 de l'enroulement intérieur 4 (ou de l'inducteur solénoïdal à une couche) et, de préférence, même une partie de leurs faces normales à celle-ci, soient laissées libres à entrer en contact avec le pourtour P de la charge C, où se formera la couche non fondue, isolante, qui sert de creuset.

Il est à remarquer ici que l'on peut insérer dans l'espace entre les spires intérieures 6 voisines, avant d'enrober l'inductance 3, des bandes d'espacement en feutre isolant de céramique réfractaire (d'alumine, par exemple) ou des plaquettes céramiques formant des entretoises.

Comme il a été dit précédemment, un tel dispositif de fusion par induction directe dans un récipient 1 dont la paroi latérale refroidie 2 comprend au moins une partie 4 de l'inducteur multispire 3 qui en même temps chauffe la charge C par induction et en refroidit le pourtour, est utilisable pour des substances isolantes à froid, dont les températures d'inductibilité et de fusion sont pratiquement confondues, tels que les verres ou les émaux vitreux dont les courbes de résistivité en fonction de la température présentent une conductibilité électrique très faible en deçà de seuils de température lesquels, selon les verres, sont compris entre 700 et 1 000 °C, ce qui permet d'éviter les phénomènes de contournement électrique dans la couche périphérique P « gelée » de la charge C, entre les spires adjacentes 6.

Par ailleurs, la proximité naturelle existant entre la paroi intérieure de l'inducteur à une couche (ou l'enroulement intérieur 4) et la périphérie P de la charge C diélectrique, crée à l'état fondu donc conducteur de la matière, des forces de striction du bain suffisamment importantes pour refouler celui-ci radialement et accroître ainsi l'épaisseur de la pellicule solide d'isolement qui se forme au contact de la paroi froide de l'inducteur-récipient. Par conséquent, les pertes thermiques du bain vers l'inducteur qui constitue en même temps la paroi latérale froide du récipient, sont considérablement réduites et les performances du système notablement accrues (de 40 pour cent, par exemple, comme il est dit plus loin, dans le cas particulier de la fusion du verre comparé aux dispositifs classiques avec inducteur et cage froide indépendants).

Le fond du récipient 1 est obturé au moyen d'une sole 9 en briques réfractaires (par exemple, en un matériau appelé « ZAC ») ou refroidie (en un matériau conducteur creux, par exemple). Pour permettre la coulée du verre fondu, cette sole 9 peut être percée d'un trou central 10 à travers laquelle on fait passer une buse 11 en un matériau conducteur électrique réfractaire, tel que le tungstène, le graphite (« carborundum ») ou le carbure de silicium. La partie de la buse 11 qui émerge du fond 9, est entourée d'un inducteur classique 12 qui permet de la chauffer pendant la coulée à l'aide d'un générateur indépendant pouvant fournir entre 10 et 15 kilowatts, par exemple, pour l'amener à une température supérieure à celle de fusion de la substance contenue dans le four (cf. FR-A-2 054 464).

Le démarrage ou amorçage de la fusion est effectué ici de préférence, en utilisant un « suscepteur » amovible en un matériau conducteur réfractaire (graphite, tungstène). Ce suscepteur peut être plongé dans la charge C, avant la mise en circuit de l'inducteur 3 ; il est alors, de préférence, de forme annulaire ou cylindrique et suspendu à l'aide de câbles 13 en un métal réfractaire tel que le molybdène, qui permettent de le retirer du bain.

Il peut également, comme représenté sur la figure 1, être réalisé sous la forme d'une voûte 14 ou cloche rayonnante en graphite, qui peut être disposée dans le champ de l'inducteur 3 au-dessus de la charge C en fritte, ne devant pas alors entièrement remplir le récipient 1. L'inducteur 3 permet de porter la voûte 14 à une température suffisante pour faire fondre par rayonnement (infrarouge) une couche superficielle de la charge C, la fusion se propageant ensuite dans le reste, de manière connue. La voûte 14 devra être escamotée à l'aide de câbles de suspension 13, pour permettre le remplissage du récipient 1 au moyen d'une trémie (non représentée) contenant la fritte, la poudre, les grains, ou les morceaux (billes ou autres particules) de la substance à faire fondre.

La figure 2 montre une coupe axiale partielle en élévation du mode de réalisation préféré d'un inducteur multispire constituant en même temps la paroi latérale refroidie d'un récipient pour la fusion par induction directe, qui permet la formation d'une couche périphérique isolante de la substance constituant la charge, pour former un « creuset » temporaire, non polluant, *in situ* (ou « auto-creuset »).

Dans ce mode de réalisation préféré, l'inducteur 30 multispire (ou chacun de ses enroulements ou couches coaxiaux) est composé de spires annulaires (circulaires) 60 ouvertes et superposées, réalisées en un conducteur (cuivre) tubulaire de section rectangulaire, dont les extrémités opposées sont respectivement reliées à celles des spires voisines 61 et 62 par des tronçons tubulaires 63 et 64 orientés, de préférence, chacun dans le sens d'une génératrice (parallèlement à l'axe vertical).

Ce genre de liaison entre les spires d'un bobinage à une couche, généralement appelée « en marche d'escalier », a pour effet d'améliorer la symétrie du bain de fusion par rapport à celle obtenu au moyen d'un bobinage hélicoïdal classique (solénoïde).

Les spires creuses 6 ou 60 sont orientées de telle sorte que les grands côtés de leur section rectangulaire soient verticaux et leurs petits côtés horizontaux, afin que, grâce aux faibles distances entre les spires voisines, la surface froide constitue la majeure partie de la face intérieure du récipient, c'est-à-dire qu'elle soit aussi grande que possible et que, malgré ce faible espacement, les capacités parasites entre spires adjacentes soient aussi faibles que possible.

Il est à remarquer ici que lorsque l'inducteur 3 comprend plusieurs couches ou enroulements concentriques, ceux (extérieurs) qui ne servent pas au refroidissement de la périphérie P latérale de la charge C, peuvent être réalisés en tubes de sections différentes, telles que circulaires et peuvent comporter des pas et des nombres de spires également différentes en vue de réduire les capacités entre les couches et/ou d'obtenir des valeurs d'inductance désirées.

L'agencement de l'inducteur-récipient ayant deux enroulements multispires coaxiaux de même pas, avec les spires des enroulements de même section disposées radialement dans les mêmes plans respectifs, de la manière illustrée sur la figure 1, peut avoir pour conséquence un certain affaiblissement du champ magnétique alternatif au voisinage des fentes entre les spires voisines de l'enroulement intérieur, notamment du fait qu'il s'y produit une sorte de soustraction vectorielle des champs magnétiques de sens contraire engendrés par les courants électriques parallèles. Cet affaiblissement peut être réduit par une disposition particulière de l'un des enroulements par rapport à l'autre, qui consiste en un décalage relatif dans le sens axial pour que les sections des spires selon un plan diamétral passant par cet axe, forment un motif semblable à deux rangées d'un quinconce.

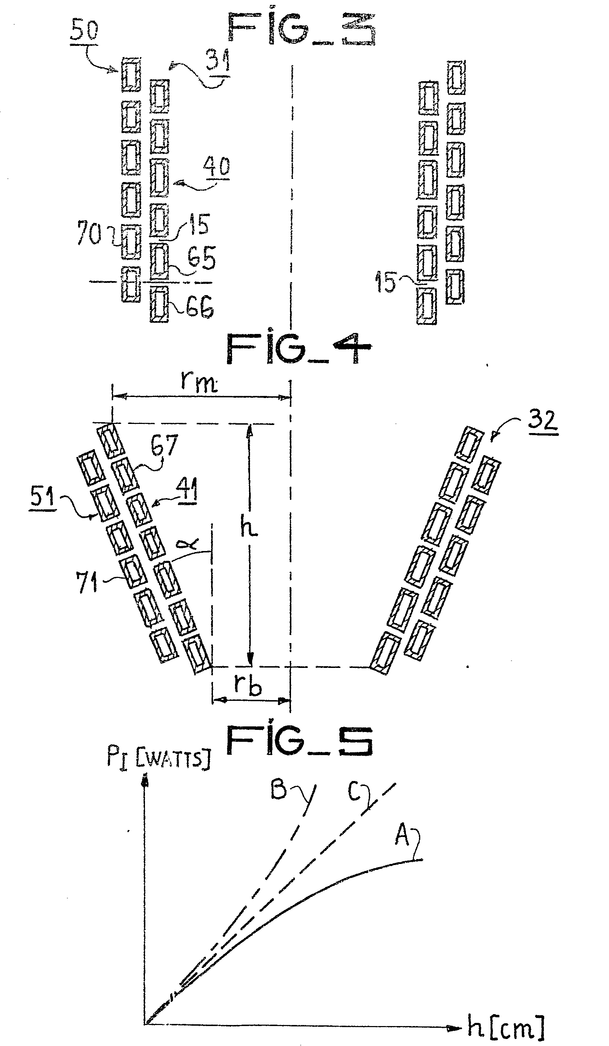

Un tel agencement de l'inducteur multicouche (à deux enroulements) a été représenté schématiquement en coupe, sur la figure 3.

Sur la figure 3, on a représenté une coupe diamétrale et axiale, en élévation, d'un inducteur multispire 31 à deux enroulements cylindriques coaxiaux 40, 50 dont l'intérieur 40 constitue la majeure partie de la paroi latérale refroidie du récipient.

Chaque spire 65, 66, 70 est réalisée en tube de section rectangulaire. Ce perfectionnement consiste à décaler axialement l'enroulement extérieur 50 par rapport à l'intérieur 40 de telle sorte que le plan médian de chaque spire 70 de ce dernier soit sensiblement situé au niveau de celui de la fente 15 séparant deux spires 65, 66 adjacentes de l'enroulement intérieur 40. Cette mesure permet de compenser, en partie, l'affaiblissement relatif du champ magnétique et, par conséquent, de l'intensité du courant induit au niveau de cette fente 15. La section constitue ainsi un motif semblable à deux rangées d'un quinconce.

Un autre mode de réalisation de l'invention est, plus particulièrement, agencé de façon à permettre l'amélioration du rendement énergétique d'un four vertical à induction directe, où l'inducteur lui-même ou l'un des deux inducteurs coaxiaux (l'intérieur) constitue lui-même la paroi latérale froide du récipient (creuset) contenant la substance à faire fondre. Ce mode de réalisation est applicable notamment à des fours de grande puissance, destinés, en particulier, à des matériaux à haute résistivité (à l'état chaud ou fondu) pour lesquels la profondeur de pénétration du champ magnétique dépasse largement le rayon de la charge fondue, contenue dans un récipient cylindrique.

Des récipients froids de formes autres que cylindriques sont connus, par exemple, de la publication FR-A-2 036 418 qui décrit un four à induction directe constituant un perfectionnement avantageux de celui décrit dans la publication FR-A-1 492 063 précitée, où la gaine froide divisée (segmentée) formant la paroi latérale du récipient comporte une paroi extérieure cylindrique, entourée par un inducteur solénoïdal et une paroi intérieure étranglée vers le bas (s'élargissant vers le haut). Par contre, dans la publication FR-A-2 303 774, la gaine froide est de forme tronconique s'élargissant vers le bas (rétrécissant vers le haut) avec une ouverture angulaire de sa section diamétrale de 4 à 20 degrés environ, par exemple. Un tel four à induction directe est plus particulièrement adapté à l'élaboration d'objets (lingots) mono- ou polycristallins d'oxydes métalliques réfractaires, par fusion et tirage en continu, obtenu par un déplacement vers le bas d'une plaque refroidie qui obture, en début de fusion, le fond de la gaine.

Dans le mode de réalisation de l'invention, illustré par la figure 4, l'inducteur-récipient multispire ou l'enroulement intérieur d'un ensemble de plusieurs enroulements coaxiaux, est constitué par un assemblage de spires circulaires superposées et reliées en série, dont les diamètres respectifs augmentent avec la hauteur par rapport à la base, de telle sorte que la paroi latérale du récipient présente une forme tronconique, étranglée vers le bas. Les enroulements extérieurs présentent une forme analogue et sont, de préférence, disposés avec leurs spires alignés avec les fentes de l'enroulement qu'ils entourent.

Sur la figure 4, on a représenté un mode de réalisation de l'invention, destiné à un four de haut rendement qui est rendu possible par la forme tronconique de l'inducteur-récipient multispire 32 pouvant comporter un 41 ou plusieurs (41, 51) enroulements coaxiaux. Ces enroulements 41, 51 peuvent être décalés l'un par rapport à l'autre, selon leurs génératrices parallèles de manière analogue à celle illustrée sur la figure 3. Le cône tronqué formant la paroi latérale du récipient (creuset) a été représenté comme s'élargissant vers le haut, ce qui constitue le mode de réalisation préféré pour un four à induction vertical, destiné à la coulée en continu à travers une buse chauffée (voir la figure 1 ou la publication FR-A-2 054 464 précitée). L'angle d'ouverture du cône $2\alpha$ est choisi en fonction de la hauteur h du récipient, afin qu'en haut, le rayon maximal $r_m = d/2$ de celui-ci soit sensiblement égal à la profondeur de pénétration p du champ magnétique alternatif, de haute ou de moyenne fréquence. Les spires 67, 71 respectives des deux enroulements 41, 51 sont, de préférence, agencées de telle sorte que les grands côtés de leur section rectangulaire sont alignés parallèlement à la génératrice du cône tronqué.

L'expérience a montré qu'au démarrage de la fusion dans la partie inférieure de l'inducteur-récipient (situé au voisinage du fond au rayon minimal $r_b$), la pénétration des courants induits est, le plus souvent, largement supérieure au rayon de la charge initiale qui constitue en fait le pied de bain. De ce fait, l'efficacité (rendement) électrique et, par conséquent, thermique du four est alors limitée. Toutefois, la puissance consommée, du fait du faible volume du bain initial, est relativement faible et la profondeur de pénétration trop grande n'est pas trop nuisible. La puissance fournie doit néanmoins être suffisante pour entretenir le bain et le faire progresser en hauteur (ou en volume).

Dans le cas d'un inducteur-récipient de forme cylindrique la puissance appelée par le bain qui s'élève, croît au départ sensiblement linéairement avec la hauteur de celui-ci. Par la suite, la puissance consommée croît moins rapidement à cause de l'évolution défavorable du rapport du diamètre d du bain (qui reste constant) à sa hauteur h (qui augmente), c'est-à-dire que le rapport d/h diminue avec l'augmentation de la hauteur. En d'autres termes, dans le cas d'un récipient-inducteur de forme cylindrique, le flux énergétique moyen ou la puissance volumique moyenne, exprimés en watts par centimètre cube (W/cm$^3$), induit dans le bain, qui est fonction du rapport d/h, tend à diminuer avec la progression de la hauteur h.

Ceci a été représenté par le diagramme A de la figure 5 qui indique l'évolution de la puissance induite avec la hauteur du bain. Ce diagramme A (en trait continu) indique que pour un bain cylindrique, il faudrait soit réduire la progression de la puissance fournie à l'inducteur avec la hauteur du bain par rapport à une évolution linéaire (courbe C de la figure 5, représentée par des tirets), soit limiter la vitesse de l'alimentation du four en fritte de verre (ou d'émail) solide et, par conséquent, celle de la coulée continue. En d'autres termes, la puissance volumique (en W/cm$^3$) diminue avec la hauteur du bain.

Dans le cas d'un inducteur-récipient à parois latérales tronconiques, on peut obtenir un rapport d/h sensiblement constant de façon à maintenir une évolution linéaire (courbe C) ou même plus rapidement croissante de la puissance induite P, en fonction de l'angle d'ouverture $2\alpha$ du cône tronqué. Une progression supérieure à l'évolution linéaire de la puissance, c'est-à-dire un accroissement global de la puissance volumique, a été représenté par le diagramme B de la figure 5 (en traits mixtes).

A titre d'exemple, on obtient dans un four à paroi latérale cylindrique de capacité nominale de 40 litres (100 kg de verre liquide à 1 400 °C), un flux énergétique moyen de 3 W/cm$^3$ au départ (pied de bain) qui diminue jusqu'à 2,5 W/cm$^3$ à pleine capacité et sa vitesse de « digestion » (fusion) du verre solide s'abaisse de 50 kg/heure au départ à 40 kg/heure, avec des paramètres électriques inchangés.

Dans un four à paroi tronconique de même capacité, présentant une ouverture anglaire $2\alpha$ de 30 degrés (l'inclinaison de la génératrice par rapport à l'axe de symétrie étant de 15°), la puissance volumique initiale 3 W/cm$^3$ s'élève progressivement à 3,5 W/cm$^3$ et même au-delà, au fur et à mesure de la progression de la hauteur du bain. Pour un tel four, en effet, le rapport de la profondeur de pénétration des courants induits au rayon du bain ($\rho = p/r$), qui est au démarrage inférieur à l'unité, tend à se rapprocher de celle-ci avec la croissance de la hauteur du bain. Or l'efficacité thermique (et électrique) du système comprenant le four et la charge liquide devient maximale lorsque la profondeur de pénétration p devient égale au rayon r. Dans un four à paroi tronconconique, la vitesse de l'alimentation en fritte solide reste sensiblement constante ou peut même croître durant le cycle de remplissage du four. Bien entendu, la variation du diamètre des spires avec la distance par rapport au fond peut être autre que linéaire et l'étranglement peut être inversé si l'on désire tirer des lingots.

Il est à remarquer, notamment, que l'inductance plus élevée des inducteurs multispires formant en même temps la paroi latérale refroidie du récipient, permet l'utilisation des moyennes fréquences industrielles, de préférence comprises entre 10 et 50 kHz, qui peuvent être produites par des onduleurs (convertisseurs statiques continu-alternatif) ou des cyclo-convertisseurs (convertisseurs statiques alternatif-alternatif), ou encore par des groupes moteur-alternateur, dont le rendement est meilleur que celui des auto-oscillateurs à tubes à vide (triodes).

Des fours industriels par induction directe de verres ou de substances analogues de ce genre (à base de silice), permettent d'obtenir des capacités de production de 50 à 500 kilogrammes de matériau vitreux fondu à l'heure (chauffé à des températures comprises entre 1 200 et 1 600 °C, par exemple) avec des puissances actives consommées allant respectivement de 100 à 1 000 kilowatts.

Si l'on compare le rendement d'un four à cage froide segmentée entouré d'un inducteur à celui d'un four à inducteur multispire et cage combinés suivant l'invention, on obtient pour des capacités (volumes) analogues et une puissance de 100 kilowatts fournie par le générateur, 27 kg/heure pour le premier et 40 kg/heure pour le second.

## Revendications

1. Dispositif de fusion par induction directe de substances diélectriques dont les températures d'inductibilité et de fusion sont voisines, dans un récipient (1) dont la paroi latérale (2) constitue en même temps un inducteur de chauffage et une surface de refroidissement pour la périphérie (P) d'une charge (C) de cette substance, caractérisé en ce que cet inducteur-refroidisseur (3) comporte plusieurs spires (6) de métal conducteur tubulaire, assemblées par superposition de telle sorte que le centre de chaque spire (6) coïncide avec l'axe de symétrie vertical de l'inducteur (3), ces spires (6) étant électriquement et hydrauliquement reliées en série et parcourues par un fluide de refroidissement, de façon à former un corps creux s'étendant sur la quasi-totalité de la hauteur de cette paroi latérale (2).

2. Dispositif de fusion suivant la revendication 1, caractérisé en ce que les spires (6) sont réalisées en un tube de section rectangulaire dont les grands côtés sont orientés parallèlement à l'axe ou à la génératrice de la face interne des spires (6) formant la majeure partie de la paroi latérale (2).

3. Dispositif de fusion suivant l'une quelconque des revendications précédentes, caractérisé en ce que l'espacement entre les spires (6) voisines est réduit et choisi de telle sorte que l'action de refroidissement qu'elles exercent sur le voisinage de cet espace soit suffisant pour maintenir la substance à fondre dans son état isolant.

4. Dispositif de fusion suivant l'une quelconque des revendications précédentes, caractérisé en ce que l'inducteur multispire (3) est muni d'un enrobage (8) extérieur en matériau isolant qui assure sa solidité mécanique et son étanchéité aux particules de la substance à fondre et qui laisse libre les parois métalliques des spires qui sont tournées vers l'intérieur, afin qu'elles puissent exercer leur action de refroidissement sur la périphérie (P) de la charge (C).

5. Dispositif de fusion suivant l'une quelconque des revendications précédentes, caractérisé en ce que les spires (60) sont de forme circulaire ouverte, leurs extrémités opposées étant respectivement réunies à celles des spires adjacentes (61, 62) au moyen de tronçons tubulaires (63, 64) métalliques, parallèles à des génératrices du corps du récipient (1).

6. Dispositif de fusion suivant l'une quelconque des revendications précédentes, caractérisé en ce que l'inducteur (3) comporte, outre un enroulement intérieur (4) composé d'un assemblage des spires (6) formant la majeure partie de la surface intérieure de la paroi latérale (2), un ou plusieurs enroulements extérieurs (5) entourant coaxialement l'enroulement intérieur (4).

7. Dispositif de fusion suivant les revendications 4 et 6, caractérisé en ce que le ou les enroulements extérieurs (5) sont entièrement inclus dans l'enrobage isolant (8).

8. Dispositif de fusion suivant l'une quelconque des revendications 6 et 7, caractérisé en ce que le ou les enroulements extérieurs (5) sont reliés en série entre eux, ainsi qu'avec l'enroulement intérieur (4).

9. Dispositif de fusion suivant l'une quelconque des revendications précédentes, caractérisé en ce que toutes les spires (6) d'un même enroulement (4 ou 5) présentent des diamètres sensiblement identiques de façon à former un corps cylindrique creux.

10. Dispositif suivant l'une quelconque des revendications 1 à 8, caractérisé en ce que les diamètres respectifs des spires superposées formant chaque enroulement de l'inducteur (32), varient en fonction de leur distance axiale par rapport au fond de celui-ci.

11. Dispositif de fusion suivant la revendication 10, caractérisé en ce que la variation du diamètre des spires (67, 71) en fonction de leur distance respective par rapport au fond est linéaire, de sorte qu'elles forment un corps creux de forme tronconique.

12. Dispositif de fusion suivant la revendication 11, caractérisé en ce que le corps de forme tronconique s'élargit vers le haut.

13. Dispositif de fusion suivant l'une quelconque des revendications 10 à 12, caractérisé en ce que l'inducteur (32) comprend deux ou plusieurs enroulements multispires (41, 51) coaxiaux, de même forme, l'un (51) entourant l'autre (41).

14. Dispositif de fusion suivant l'une quelconque des revendications 6 à 13, caractérisé en ce que les enroulements voisins (40, 50 ou 41, 51) sont décalés l'un par rapport à l'autre, selon leurs génératrices parallèles, de telle sorte que le plan médian de chaque spire (70) de l'un (50 ou 51) coïncide sensiblement avec le plan médian de chaque fente (15) entre deux spires adjacentes (65, 66 ou 67, 71) de l'autre (40 ou 41).

15. Dispositif du fusion suivant l'une quelconque des revendications précédentes, caractérisé en ce qu'il comporte un suscepteur amovible en forme de voûte (14) en un matériau conducteur rayonnant tel que le graphite, qui peut être disposé au-dessus de la charge (C) dans le champ magnétique de l'inducteur (3) et qui sert à préchauffer par rayonnement une couche superficielle de la charge (C), afin qu'elle puisse devenir siège de courant induits.

**Claims**

1. A device for melting dielectric substances whose inductibility and melting temperatures are close to one another, by direct induction in a receptacle (1) whose lateral wall (2) forms a heating inductor as well as a cooling surface for the periphery (P) of a charge (C) of this substance, characterized in that this inductor-cooler (3) comprises several tubular turns (6) of conducting metal, assembled together by superimposition so that the center of each turn (6) coincides with the vertical axis of symmetry of the inductor (3), these turns (6) being electrically and hydraulically connected in series and having flowing therethrough a cooling fluid, so as to form a hollow body extending over substantially the whole height of this lateral wall (2).

2. A melting device as claimed in claim 1, characterized in that the turns (6) are made from a tube of rectangular section whose large sides are orientated parallel to the axis or to the generatrix of the internal face of the turns (6) forming the major part of the lateral wall (2).

3. A melting device according to any one of the preceding claims, characterized in that the spacing between adjacent turns (6) is reduced and chosen so that the cooling action which they exert on the vicinity of this space is sufficient to maintain the substance to be melted in its insulating state.

4. A melting device as claimed in any one of the preceding claims, characterized in that the multiturn inductor (3) is provided with an outer coating (8) of an insulating material which ensures its mechanical strength and its tightness to particles of the substance to be melted and which leaves free the metal walls of the turns which are turned inwardly, so that they may exert their cooling action on the periphery (P) of the charge (C).

5. A melting device as claimed in any one of the preceding claims, characterized in that the turns (60) have an open circular shape, their opposite ends being respectively joined to those of the adjacent turns (61, 62) by means of portions of metal tubes (63, 64) parallel to generatrices of the body of the receptacle (1).

6. A melting device as claimed in any one of the preceding claims, characterized in that the inductor (3) comprises, besides an inner winding (4) constituted by an assembly of turns (6) forming the major part of the inner surface of the lateral wall (2), one or more outer windings (5) surrounding coaxially said inner winding (4).

7. A melting device as claimed in claims 4 and 6, characterized in that the outer winding (5) or windings is or are entirely included in the insulating coating (8).

8. A melting device as claimed in any one of claims 6 and 7, characterized in that the outer winding is or the outer windings (5) are connected together in series, as well as with the inner winding (4).

9. A melting device as claimed in any one of the preceding claims, characterized in that all the turns (6) of any of the windings (4 or 5) have substantially identical diameters so as to form a hollow cylindrical body.

10. A melting device as claimed in any one of claims 1 and 8, characterized in that the respective diameters of the superimposed turns forming each winding of the inductor (32) vary as a function of their axial distance with respect to the bottom thereof.

11. A melting device as claimed in claim 10, characterized in that the variation of the diameter of the turns (76, 71) as a function of their respective distance with respect to the bottom is linear, so that they form a hollow body of a truncated cone shape.

12. A melting device as claimed in claim 11, characterized in that the body of a truncated cone shape widens towards the top.

13. A melting device as claimed in any one of claims 10 to 12, characterized in that the inductor (32) comprises two or more coaxial multi-turn windings (41, 51) of the same shape, one (51) surrounding the other (41).

14. A melting device as claimed in any one of claims 6 to 13, characterized in that the adjacent windings (40, 50 or 41, 51) are offset with respect to each other, along their parallel generatrices, so that the median plane of each turn (70) of one (50 or 51) coincides substantially with the median plane of each slit (15) between two adjacent turns (65, 66 or 67, 71) of the other (40 or 41).

15. A melting device as claimed in any one of the preceding claims, characterized in that it comprises a removable susceptor in the shape of a vault (14) made from a radiating conducting material such as graphite, which may be disposed above the charge (C) in the magnetic field of the inductor (3) and which serves to preheat by radiation a surface layer of the charge (C) so that it may become the seat of induced currents.

## Ansprüche

1. Vorrichtung zum Schmelzen dielektrischer Substanzen, deren Induktibilitätstemperatur nahe bei der Schmelztemperatur liegt, durch Direktinduktion in einem Behälter (1), dessen Seitenwand (2) sowohl einen heizinduktor als auch eine Kühlfläche für den Randbereich (P) einer Charge (C) dieser Substanz bildet, dadurch gekennzeichnet, daß dieser Induktor-Kühler (3) mehrere rohrförmige Windungen aus einem leitenden Material besitzt, die so einander überlagert sind, daß die Mitte jeder Windung (6) mit der senkrechten Symmetrieachse des Induktors (3) zusammenfällt, und daß diese Windungen (6) elektrisch und hydraulisch in Reihe geschaltet und von einem Kühlmittel durchflossen sind, so daß sie einen sich praktisch über die gesamte Höhe dieser Seitenwand (2) erstreckenden Hohlkörper bilden.

2. Schmelzvorrichtung nach Anspruch 1, dadurch gekennzeichnet, daß die Windungen (6) von einem Rohr mit Rechteckquerschnitt gebildet werden, dessen große Seiten parallel zur Achse oder zur Mantellinie der Innenseite der Windungen (6) ausgerichtet sind und den größten Teil der Seitenwand (2) bilden.

3. Schmelzvorrichtung nach einem beliebigen der vorhergehenden Ansprüche, dadurch gekennzeichnet, daß der Abstand zwischen den benachbarten Windungen (6) verringert ist und so gewählt wird, daß die Kühlwirkung, die sie in der Nähe dieses Zwischenraums erzeugen, ausreicht, um die zu schmelzende Substanz in ihrem isolierenden Zustand zu halten.

4. Schmelzvorrichtung nach einem beliebigen der vorhergehenden Ansprüche, dadurch gekennzeichnet, daß der mehrere Windungen aufweisende Induktor (3) außen mit einem Isoliermaterial (8) umhüllt ist, das die mechanische Festigkeit und die Dichtheit gegenüber den Partikeln der zu schmelzenden Substanz sichert und die nach innen gerichteten metallischen Wände der Windungen freiläßt, damit diese ihre Kühlwirkung auf den Randbereich (P) der Charge (C) ausüben können.

5. Schmelzvorrichtung nach einem beliebigen der vorhergehenden Ansprüche, dadurch gekennzeichnet, daß die Windungen (60) die Form eines offenen Kreises aufweisen und ihre einander gegenüberliegenden Enden mit den benachbarten Windungen (61, 62) über Abschnitte von Metallrohren (63, 64) die parallel zu Mantellinien des Behälters (1) liegen, verbunden sind.

6. Schmelzvorrichtung nach einem beliebigen der vorhergehenden Ansprüche, dadurch gekennzeichnet, daß der Induktor (3) außer einem aus einer Gruppe von Windungen (6) zusammengesetzten inneren Wicklung (4), die den größten Teil der Innenfläche der Seitenwand (2) bildet, eine oder mehrere äußere Wicklungen (5) aufweist, die koaxial die innere Wicklung (4) umgeben.

7. Schmelzvorrichtung nach den Ansprüchen 4 und 6, dadurch gekennzeichnet, daß die äußere Wicklung (5) oder die äußeren Wicklungen vollständig von dem Isoliermaterial (8) umhüllt ist bzw. sind.

8. Schmelzvorrichtung nach einem beliebigen der Ansprüche 6 und 7, dadurch gekennzeichnet, daß die äußere Wicklung. (5) bzw. die äußeren Wicklungen in Reihe miteinander sowie mit der inneren Wicklung (4) verbunden ist bzw. sind.

9. Schmelzvorrichtung nach einem beliebigen der vorhergehenden Ansprüche, dadurch gekennzeichnet, daß alle Windungen (6) einer Wicklung (4 oder 5) im wesentlichen gleiche Durchmesser aufweisen und somit einen zylindrischen Hohlkörper bilden.

10. Vorrichtung nach einem beliebigen der Ansprüche 1 bis 8, dadurch gekennzeichnet, daß die einzelnen Durchmesser der übereinanderliegenden Windungen, die jede Induktorwicklung (32) bilden, gemäß ihrem axialen Abstand bezüglich des Bodens des Induktors variieren.

11. Schmelzvorrichtung nach Anspruch 10, dadurch gekennzeichnet, daß die Variation des Durchmessers der Windungen (67, 71) abhängig von ihrem jeweiligen Abstand bezüglich des Bodens linear ist, so daß sie einen kegelstumpfförmigen Hohlkörper bilden.

12. Schmelzvorrichtung nach Anspruch 11, dadurch gekennzeichnet, daß der kegelstumpfförmige Körper sich nach oben erweitert.

13. Schmelzvorrichtung nach einem beliebigen der Ansprüche 10 bis 12, dadurch gekennzeichnet, daß der Induktor (32) zwei oder mehrere, je aus mehreren Windungen bestehende koaxiale Wicklungen (41, 51) gleicher Form aufweist, von denen eine (51) die andere (41) umgibt.

14. Schmelzvorrichtung nach einem beliebigen der Ansprüche 6 bis 13, dadurch gekennzeichnet, daß die benachbarten Wicklungen (40, 50 oder 41, 51) zueinander in Richtung ihrer parallelen Mantellinien so verschoben sind, daß die mittlere Ebene jeder Windung (70) der einen Wicklung (50 oder 51) im wesentlichen mit der mittleren Ebene jedes Spaltes (15) zwischen zwei benachbarten Windungen (65, 66 oder 67, 71) der anderen Wicklung (40 oder 41) zusammenfällt.

15. Schmelzvorrichtung nach einem beliebigen der vorhergehenden Ansprüche, dadurch gekennzeichnet, daß sie einen abnehmbaren Suszeptor in Form eines Gewölbes (14) aus einem strahlenden Leitmaterial wie z. B. Graphit aufweist, der oberhalb der Charge (C) im Magnetfeld des Induktors (3) angeordnet werden kann und dazu dient, eine Oberflächenschicht der Charge (C) durch Strahlung vorzuheizen, so daß sich in dieser induzierte Ströme ausbilden können.

## FIG_1

## FIG_2

1

# FIG_3

50

31

40

70

15

65

66

15

# FIG_4

rm

67

32

51

41

h

α

71

rb

# FIG_5

$P_I$ [WATTS]

B

C

A

h [cm]